# EUROPEAN PATENT APPLICATION

(11) **EP 4 647 774 A1**
(43) Date of publication of application: **12.11.2025**
(21) Application number: 25170592.7
(22) Date of filing: 15.04.2025
(51) Int. Cl.: G01P 5/26, G01P 13/02, B64D 43/02, G01B 9/02, G01S 7/481, G01S 17/58

(54) **TECHNIQUES FOR IMPROVING PERFORMANCE, GOVERNMENTAL REGULATION COMPLIANCE AND/OR SAFETY OF AN OPTICAL AIR DATA SYSTEM**

(30) Priority: 09.05.2024 US 202463644875 P; 22.01.2025 US 202519034099
(71) Applicant: Honeywell International Inc., Charlotte, NC 28202 (US)
(72) Inventor: GAO, Kaizhong, Charlotte, 28202 (US)
(74) Representative: Haseltine Lake Kempner LLP

(57) **Abstract**

To improve OADS safety and/or performance of an optical air data system (OADS), only when a vehicle including the OADS is above an altitude threshold level may an optical emitter, of a pair of an optical receiver and the optical emitter (or "a pair"), whose transmitting line of sight (LOS) projects towards the Earth, be permitted to emit a transmitted optical beam. Otherwise, laser optical energy can cause eye damage. OADS performance may be improved because reflections from the Earth do not characterize atmosphere around a vehicle, and thus may generate an error in OADS air data parameter calculations. Further to improve OADS performance, only a subset of pair(s), of an optical emitter and an optical receiver, are selected that are necessary to determine desired optical air data parameter(s) and whose optical receiver(s) have the largest signal-to-noise ratio(s) (SNR(s)) of all of the SNR(s) of optical receiver(s).

## Description

### CROSS-REFERENCE TO RELATED APPLICATIONS

The present application claims benefit of U.S. Patent Application Serial No. 63/644,875 filed May 9, 2024; the entire contents of the aforementioned patent application are incorporated herein by reference as if set forth in its entirety.

### BACKGROUND

An Optical Air Data system (OADS) is proposed as a supplement to or a replacement for a conventional air data system for aircraft. The OADS is configured to emit a set of two, three, four, or more transmitted optical beams. Each transmitted optical beam is emitted to a unique region of atmosphere. A portion of each transmitted optical beam, is reflected and/or scattered back to the OADS. Each such portion may be referred to herein as a return optical signal or a scattered and/or a reflected optical signal.

Using the return optical signal(s), the OADS may determine air data parameter(s) including without limitation temperature, air density, humidity, true airspeed, angle of attack (AoA), and/or angle of sideslip (AoS).¹ An exemplary OADS is illustrated in U.S. Patent No. 7,495,774 which is incorporated by reference in its entirety herein.
True airspeed means a speed of the vehicle relative to the air through which the vehicle travels. Angle of attack means an angle between a reference line of a body of the vehicle (*e.g.,*a chord of a foil, for example, a wing) and a vector representing relative motion between the body and fluid through which the body is moving. Angle of sideslip means an angle between which a direction in which a body of a vehicle is pointing and a direction in which the body of the vehicle is actually travelling.

To determine the air data parameter(s), the OADS characterizes each pairs of a transmitted optical beam and the return optical signal scattered and/or reflected from a region of the atmosphere. Each pair includes (a) a transmitted optical beam, which is emitted along a unique transmit line of sight (LOS) that is different from the transmitted LOS of the transmitted optical beam, of other pair(s) and (b) the return optical signal is received along a unique receive line of sight (LOS) which is different than the receive LOS of return optical signals of other pair(s).

However, it may not be possible to utilize data from each pair. This may arise because the reception of a return optical signal is attenuated. For example, ice or dust can obscure optical receiver(s). Alternatively, light from the Sun may generate optical noise which detrimentally affects the sensitivity of one or more optical receivers.

### SUMMARY

In some aspects, the techniques described herein relate to a method for improving performance and/or safety of an optical air data system of a vehicle, wherein the OADS includes at least one pair of an optical emitter and an optical receiver, the method including: receiving an altitude of the vehicle; determining whether the altitude of the vehicle exceeds an altitude threshold level; determining that the altitude of the vehicle exceeds the altitude threshold level, then disabling each pair, or optical emitter of a pair whose transmit line of sight (LOS) points towards Earth; obtaining at least one type of air data parameters to be determined using data, from a transmitted optical beam propagating along a unique transmit LOS and a return optical signal propagating along a unique receive LOS, of at least one pair of the optical emitter and the optical receiver; (a) transmitting the transmitted optical beam along the unique transmit LOS from and (b) receiving the return optical signal, along the unique receive LOS and derived from scattering and/or reflection of the transmitted optical beam at a region of atmosphere, at each pair which has not been disabled or whose optical emitter has not been disabled; generating a set of one or more signal-to-noise ratios (SNRs) of each received return optical signal of a pair which has not been disabled or whose optical emitter has not been disabled; and determining a set of pairs each of which includes an optical receiver whose SNR is in a subset, of the set of the one or more SNRs, whose number of SNRs is equal to a number of pairs needed to determine the at least one type of the air data parameters and has an SNR larger than other SNRs of the set and not of the subset.

In some aspects, the techniques described herein relate to a non-transitory computer readable medium storing a program causing at least one processor to execute a process to improve performance and/or safety of an optical air data system of a vehicle, wherein the OADS includes at least one pair of an optical emitter and an optical receiver, the process including: receiving an altitude of the vehicle; determining whether the altitude of the vehicle exceeds an altitude threshold level; determining that the altitude of the vehicle exceeds the altitude threshold level, then disabling each pair or an optical emitter whose transmit line of sight (LOS) points towards Earth; obtaining at least one type of air data parameters to be determined using data, from a transmitted optical beam propagating along a unique transmit LOS and a return optical signal propagating along a unique receive LOS, of at least one pair of the optical emitter and the optical receiver; (a) causing transmission of the transmitted optical beam along the unique transmit LOS from and (b) causing reception of the return optical signal, along the unique receive LOS and derived from scattering and/or reflection of the transmitted optical beam at a region of atmosphere, at each pair which has not been disabled or whose optical emitter has not been disabled; generating a set of one or more signal-to-noise ratios of each received return optical signal of a pair which has not been disabled or whose optical emitter has not been disabled; and determining a set of pairs each of which includes an optical receiver whose SNR is in a subset, of the set of the one or more SNRs, whose number of SNRs is equal to a number of pairs needed to determine the at least one type of the air data parameters and has an SNR larger than other SNRs of the set and not of the subset.

In some aspects, the techniques described herein relate to an optical air data system, configured to be mounted in and/or on a vehicle, the OADS including: an optical and electronic processing circuit including at least one optical sensor; a laser configured to emit an optical signal; an optical combiner/divider or switch coupled to the laser, and configured to receive the optical signal and to provide the optical signal to each optical emitter; at least one optical emitter each of which is configured to emit a transmitted optical beam derived from the optical signal; and at least one optical receiver, paired with an optical emitter, each of which is optically coupled to the optical and electronic processing circuit and is configured to receive a return optical signal, wherein each return optical signal is derived from scattering and/or reflection of a unique transmitted optical beam; wherein the optical and electronic processing circuit is configured to: receive an altitude of the vehicle; determine whether the altitude of the vehicle exceeds an altitude threshold level; determine that the altitude of the vehicle exceeds the altitude threshold level, then disable each pair or optical emitter whose transmit line of sight (LOS) points towards Earth; obtain at least one type of air data parameters to be determined using data, from a transmitted optical beam propagating along a unique transmit LOS and the return optical signal propagating along a unique receive LOS, of at least one pair of an optical emitter and an optical receiver; (a) cause transmission of the transmitted optical beam along the unique transmit LOS from and (b) cause reception of a return optical signal, along the unique receive LOS and derived from scattering and/or reflection of the transmitted optical beam at a region of atmosphere, at each pair which has not been disabled or whose optical emitter has not been disabled; generate a set of one or more signal-to-noise ratios of each received return optical signal of a pair which has not been disabled or whose optical emitter has not been disabled; and determine a set of pairs each of which includes an optical receiver whose SNR is in a subset, of the set of the one or more SNRs, whose number of SNRs is equal to a number of pairs needed to determine the at least one type of the air data parameters and has an SNR larger than other SNRs of the set and not of the subset.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1A illustrates a block diagram of one embodiment of a vehicle including an OADS implemented according to embodiments of the invention;
FIG. 1B illustrates a block diagram of one embodiment of an optical and electrical processing system;
FIG. 2 illustrates an exemplary plan view of three pairs of optical emitters and optical receivers disposed in and/or on a body of a vehicle;
FIG. 3A illustrates a top view of a vehicle and a first set of transmit line of sights of optical emitters a first set of pairs and a second set of transmit line of sights of a second set of pairs;
FIG. 3B illustrates another view of the vehicle and a first set of transmit line of sights of a first set of pairs and a second set of transmit line of sights of a second set of pairs;
FIG. 4 illustrates a flow diagram of an exemplary method for satisfies compliance with government regulation, improves human safety, and/or improves OADS performance and
FIG. 5 illustrates a flow diagram of an exemplary method for determining at least one air data parameter.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which are shown by way of illustration specific illustrative embodiments. However, it is to be understood that other embodiments may be utilized and that structural, mechanical, and/or electrical changes may be made. Furthermore, each method presented in the drawing figures and the specification is not to be construed as limiting the order in which the individual steps may be performed. The following detailed description is not to be taken in a limiting sense.

Embodiments of the invention provide a technological improvement to the performance and safety of the OADS. To improve OADS safety and/or governmental regulation compliance, in some situations, only when a vehicle including the OADS is above an altitude threshold level may an optical emitter, of a pair of an optical receiver and the optical emitter (or "a pair"), whose transmitting line of sight (LOS) projects towards the Earth, be permitted to emit a transmitted optical beam. This technique satisfies compliance with government regulations, improves human safety, and/or improves OADS performance. National, state, and/or local governments may have laws and/or regulations restricting when laser optical energy can be transmitted Earthward because it can cause damage, *e.g.*, to the eyes of human beings. OADS performance may be improved because reflections from the Earth do not characterize the atmosphere around a vehicle and thus may generate an error in OADS air data parameter calculations.

Further to improve OADS performance, only pair(s) of an optical emitter and an optical receiver which generate measurement data useful in determining at least one air data parameter. This is accomplished by selecting a subset of available pair(s) necessary to determine the desired optical air data parameter(s) and whose optical receiver(s) have the largest signal-to-noise ratio(s) (SNR(s)) of the SNR(s) of optical receiver(s) of the available (or all) pairs.

Optionally, a pair, or only the optical emitter thereof, is disabled if the transmit LOS of the pair projects towards another vehicle. Optionally, a pair or only the optical emitter thereof, is disabled, if the receive LOS of the pair projects towards the Sun. This prevents pilot(s) and/or system(s) of the other vehicle from being harmed by an optical beam.

Optionally, a pair is disabled when a base of a cone projecting from an optical receiver, of the pair, encompasses the Sun and the receive LOS of the optical receiver is the axis of the cone. This technique improves OADS performance because an optical receiver subject to incident Sunlight may have increased noise and diminished sensitivity. Thus, air data parameter measurements made using data from a pair whose optical receiver receives incident Sunlight may have diminished accuracy.

Each transmit LOS described herein is unique, and thus is different than any other transmit LOS. Each receive LOS described herein is unique, and thus is different than any other receive LOS.

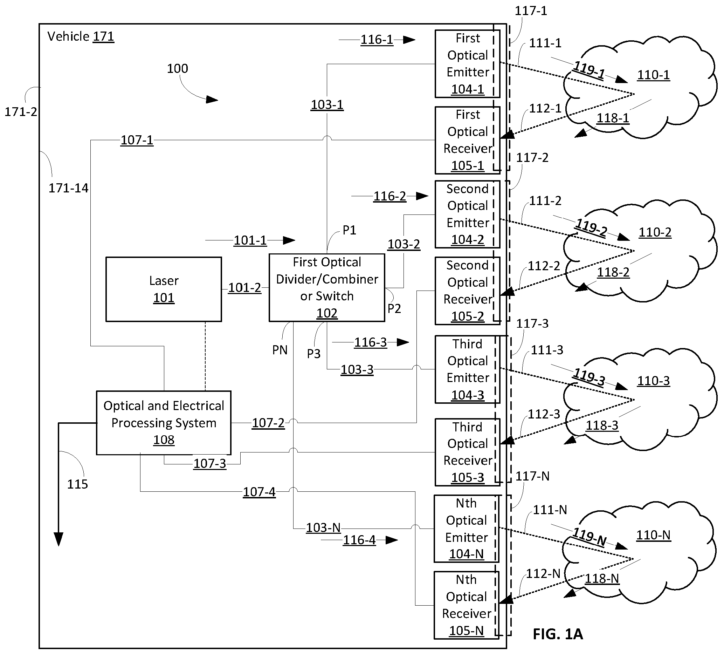

FIG. 1A illustrates a block diagram of one embodiment of a vehicle 171 including an OADS 100 implemented according to embodiments of the invention. Optionally, the vehicle 171 is an airborne vehicle such as an aircraft; however, the vehicle 171 may be another type of vehicle. The vehicle 171 has a body 171-1.

The OADS 100 includes an optical and electrical processing system (or optical and electrical processing circuitry) 108, a laser 101, a first optical divider/combiner or switch 102, and N pairs of an optical emitter 104-1, 104-2, 104-3, 104-N and an optical receiver 105-1, 105-2, 105-3, 105-N. N is an integer greater than one, *e.g.*, two, three, four, or more. The may be a multiport optical combiner/divider, a mechanical optical switch, a micro-optical-electro-mechanical switch (*e.g.*, using micromirrors for example as in digital light processing technology), Electro-Optic Modulators (EOMs) or any other type of optical switch or optical combiner or divider. The first optical switch 102 includes N output ports. The first optical divider/combiner or switch 102 is configured to simultaneously or non-simultaneously (e.g., sequentially) provide the transmitted optical signal to each optical emitter 104-1, 104-2, 104-3, 104-N.

For pedagogical purposes, the OADS 100 illustrated in FIG. 1A includes four pairs of optical emitters and optical receivers. Thus, the first optical switch 102 is illustrated in FIG. 1A is shown as having four output ports.

The laser 101 is configured to emit a continuous wave or a pulsed optical signal 101-1; for pedagogical purposes, a pulsed optical signal may be illustrated herein. The laser 101 is optically coupled to the first optical switch 102 which is configured to receive the optical signal 101-1. The optical signal 101-1 is conveyed by a laser optical waveguide 101-2 from the laser 101 to the first optical switch 102.

The first optical switch 102 is configured to transmit the optical signal 101-1 to optical emitters 104-1, 104-2, 104-3, 104-N, or a subset thereof. Thus, the optical emitters 104-1, 104-2, 104-3, 104-N, or a subset thereof, are configured to receive the optical signal 101-1, and to transmit a transmitted optical beam derived from the unique time segmented portion 116-1, 116-2, 116-3, 116-4 of the optical signal 101-1.

FIG. 1A illustrates N sets of optical emitters each of which includes one optical emitter; each optical emitter 104-1, 104-2, 104-3, 104-N is optically coupled by a unique emitter optical waveguide 103-1, 103-2, 103-3, 103-N to a unique output port P1, P2, P3, PN of the first optical switch 102. Each optical emitter 104-1, 104-2, 104-3, 104-N includes at least one optical waveguide, at least one lens, at least one mirror, at least one filter, and/or an optical window. Each optical receiver 105-1, 105-2, 105-3, 105-N includes at least one optical waveguide, at least one lens, at least one mirror, at least one filter, and/or an optical window. Optionally, one or more of the optical waveguides described herein include an optical fiber and/or a planar optical waveguide.

Using the optical signal 101-1, *e.g.*, a pulsed optical signal, each optical emitter 104-1, 104-2, 104-3, 104-N is configured to emit a unique or different transmitted optical beam (or transmitted pulsed optical beam) 111-1, 111-2, 111-3, 111-N towards a unique or different region of atmosphere 110-1, 110-2, 110-3, 110-N. Each such transmitted optical beam 111-1, 111-2, 111-3, 111-N propagates along a unique transmit LOS 119-1, 119-2, 119-3, 119-N. A portion 112-1, 112-2, 112-3, 112-N of each transmitted optical beam 111-1, 111-2, 111-3, 111-N is reflected and/or scattered back from the unique or different region of atmosphere 110-1, 110-2, 110-3, 110-N to a corresponding optical receiver 105-1, 105-2, 105-3, 105-N; the portion of the transmitted optical beam that is reflected and/or scattered may be referred herein as a return optical signal (or a return pulsed optical signal) 112-1, 112-2, 112-3, 112-N. Each such return optical signal 112-1, 112-2, 112-3, 112-N propagates along a unique receive LOS 118-1, 118-2, 118-3, 118-N. For each transmitted optical beam 111-1, 111-2, 111-3, 111-N emitted along a unique transmit line of sight (LOS), to a region of the atmosphere, a return optical signal (derived from the transmitted optical beam) is received, along a unique receive LOS from, the unique region of the atmosphere; for pedagogical purposes, FIG. 1A illustrates each transmitted optical beam 111-1, 111-2, 111-3, 111-N is emitted along a unique transmit LOS 119-1, 119-2, 119-3, 119-N; each return optical signal 112-1, 112-2, 112-3, 112-N propagates along a unique receive LOS 118-1, 118-2, 118-3, 118-N. Optionally, the corresponding optical receiver 105-1, 105-2, 105-3, 105-N which receives a return optical signal 112-1, 112-2, 112-3, 112-N is adjacent to the optical emitter 104-1, 104-2, 104-3, 104-N that transmitted the emitted the transmitted optical beam 111-1, 111-2, 111-3, 111-N from which the return optical signal 112-1, 112-2, 112-3, 112-N is derived.

Optionally, one or more pairs are in an optical head 117-1, 117-2, 117-3, 117-N configured to be mounted on and/or in the surface 171-2 of the body 171-1. Each pair includes an optical receiver adjacent to an optical emitter. For pedagogical purposes, each pair of an optical receiver and an optical emitter are illustrated in FIG. 1A as being mounted in a unique optical head 117-1, 117-2, 117-3, 117-N. Optionally, two or more such pairs can be mounted in one unique optical head. Each optical head 117-1, 117-2, 117-3, 117-N is configured to be mounted on and/or in the body 171-1 of the vehicle 171.

Each return optical signal 112-1, 112-2, 112-3, 112-N received by an optical emitter is optically coupled through a unique optical waveguide 107-1, 107-2, 107-3, 107-4 to the optical and electrical processing system 108. The optical and electrical processing system 108 is configured to diminish optical noise in each return optical signal, amplify each return optical signal, convert each return optical signal 112-1, 112-2, 112-3, 112-N to a corresponding analog or digital electrical signal using at least one optical sensor, convert each analog electrical signal into a digital electrical signal, and/or generate at least one air data parameter 115 from using information, including derived from each electrical signal, about each pair of a transmitted optical beam and return optical signal derived from the transmitted optical beam. Optionally, information about the return optical signal may be derived from an electrical signal derived from a return optical signal. Optionally, the optical and electrical processing system 108 is coupled to the laser 101 from which the optical and electrical processing system 108 may obtain data about the transmitted optical beam.

The optical and electrical processing system 108 is optionally further configured to control the first optical divider/combiner or switch 106 based on data received from an altimeter, *e.g.*, a barometric altimeter, which may optionally be part of the optical and electrical processing system 108. Such an altimeter is configured to measure the altitude of the vehicle 171. When laser 101 emits optical pulses, the optical and electrical processing system 108 is also optionally further configured to control when each optical pulse is emitted and/or a rate of when optical pulses are emitted by the laser 101.

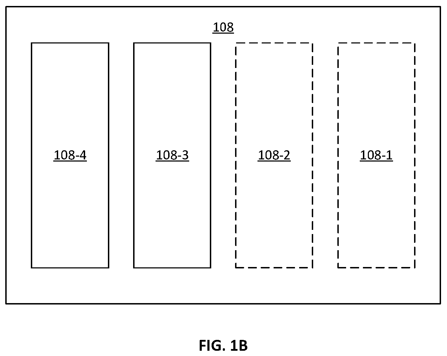

FIG. 1B illustrates a block diagram of one embodiment of an optical and electrical processing system 108. The illustrated optical and electrical processing system 108 includes at least one optical sensor 108-3, *e.g.*, camera(s), and an electronic processing system (or electronic processing circuitry) 108-4. Optionally, the optical and electrical processing system 108 also includes an optical signal combiner 108-1 and/or an interferometer 108-2, *e.g.*, a Fabry-Perot interferometer. Optionally, the interferometer includes different optical filters. Optionally, the optical signal combiner 108-1 is a second optical switch, an optical coupler, or any other type of optical signal combiner. The optional optical signal combiner 108-1 is configured to receive N return optical signals at different inputs at different times, to time sequentially the N return optical signals, and at a single optical output to provide the time sequentially combined N return optical signals. Time sequentially combining means combining each return optical signal in a time order at which each return optical signal is received, *e.g.*, by an optical signal combiner 108-1. Optionally, the optical and electrical processing system 108 may include other components, such as optical waveguide(s), optical mirror(s), optical lens(es), and/or optical filter(s).

Each of the at least one optical sensor 108-3 may optionally include a shutter. The shutter may be an electronic or a mechanical shutter. An electronic shutter is closed by electrically disabling an optical sensor and is opened by electrically enabling the optical sensor; as a result, the optical sensor does not sense the return optical signal. The electronic shutter may be opened by electrically enabling the optical sensor so that the optical sensor detects the return optical signal. Alternatively, the electronic shutter may be implemented with electro-chromatic material described elsewhere herein. A mechanical shutter is closed by mechanically positioning an optically opaque, *i.e.*, non-light transmissive, curtain over the optical sensor; as a result, the optical sensor cannot sense any optical signal.

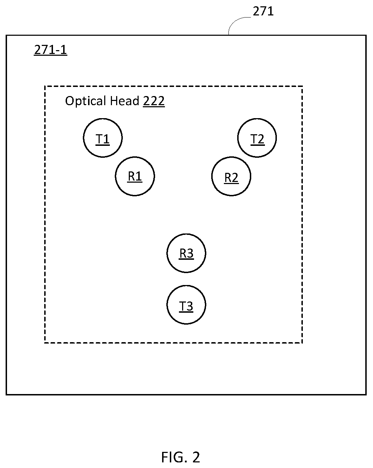

FIG. 2 illustrates an exemplary plan view of three pairs of optical emitters and optical receivers T1, R1; T2, R2; T3, R3 disposed in and/or on a body 271-1 of a vehicle 271. Optionally, the three pairs of optical emitters T1, T2, T3 and optical receivers R1, R2, R3 are disposed in an optical head 222 which is in and/or on the body 271-1. However, the optical head 222 may include one, two, or more pairs of optical emitters and optical receivers.

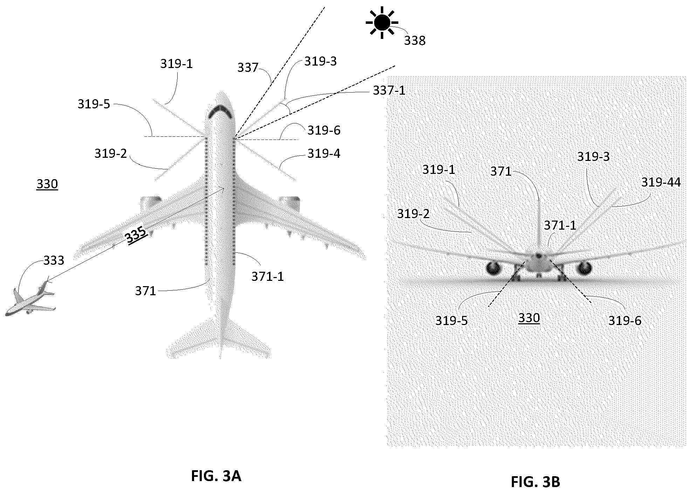

FIG. 3A illustrates a plan view of a vehicle 371 and a first set of transmit line of sights 319-1, 319-2, 319-5 of optical emitters a first set of pairs and a second set of transmit line of sights 319-3, 319-4, 319-6 of a second set of pairs. FIG. 3B illustrates another view of the vehicle 371 and a first set of transmit line of sights 319-1, 319-2, 319-5 of a first set of pairs and a second set of transmit line of sights 319-3, 319-4, 319-6 of a second set of pairs.

Returning to FIG. 3A, each pair of optical emitter and optical receiver may be disposed in and/or on the vehicle 371, *e.g.,* the body 371-1, so that an angle between any two transmit lines of sight is between thirty and one hundred and one hundred and fifty degrees, sixty and one hundred and twenty degrees, between seventy and one hundred and ten degrees, or ninety degrees. One of each Earthward (or downward) facing transmit line of sight 319-5, 319-6 of each set of line of sights is optional. Such optional Earthward facing transmit lines of sights 319-5, 319-6 project towards the surface of the Earth 330 when the vehicle 371 is in a normal position, stationary or moving.

FIG. 3A also illustrates another vehicle 333 which is a distance 335 from the vehicle, *e.g.*, a center, front, or back of the vehicle 371. One of the transmit lines of sight 319-2 projects towards the other vehicle 333.

FIG. 3A further illustrates the sun 338 within a cone 337 whose axis is a transmit line of sights 319-3 and which has a cone radius 337-1. Thus, the cone 337 is centered around the transmit LOS 319-3. Optionally, the cone radius 337-1 may be less than or equal to ten or fifteen degrees.

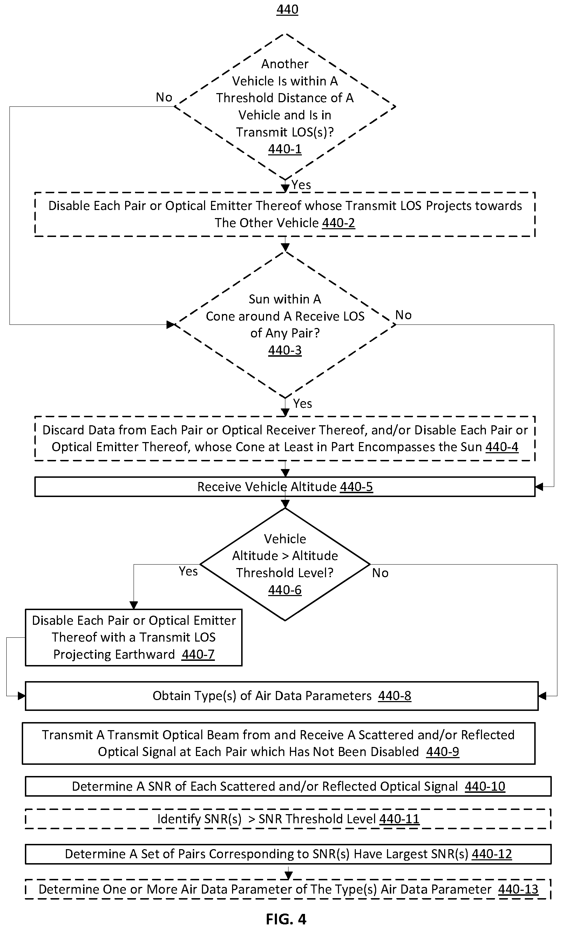

FIG. 4 illustrates a flow diagram of an exemplary method 440 for satisfies compliance with government regulation, improves human safety, and/or improves OADS performance. Exemplary method 440 may be implemented by one or more of the apparatuses illustrated in FIGS. 1A-3B. To the extent the methods herein are described herein as being implemented with one or more of the apparatuses illustrated in FIGS. 1A-3B, it is to be understood that other embodiments can be implemented in other ways. Techniques described with respect to the embodiments illustrated by FIGS. 1A-3B may be applicable to the method 440. Techniques described with respect to the methods herein may be applicable, all or in part, to the apparatuses described elsewhere herein.

The blocks of the flow diagrams herein have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In optional block 440-1, whether another vehicle is within a threshold distance of a vehicle, *e.g.*, including the OADS, and in a transmit LOS of a pair, *e.g.,* of the OADS, on and/or in the vehicle, and is in one or more optical emitters' transmit LOS. The threshold distance may optionally be selected by a user or a system designer. Such determination may be made using radar, lidar, and/or using a known position of the other vehicle. The known position of the other vehicle may be received, *e.g.*, by Automatic Dependent Surveillance (ADS), for example, ADS-B or ADS-C, or any other way. Optionally, the optical and electrical processing system includes such radar, lidar, and/or ADS system (or ADS circuitry). The position of the vehicle is known, *e.g.*, by use of a Global Navigation Satellite System (GNSS) receiver and/or an inertial navigation system (INS). Knowing the position of the other vehicle and the vehicle, a threshold distance between the other vehicle and the vehicle can be derived. Whether a transmit LOS of a pair projects towards the other vehicle can be determined using, *e.g.*, known polar and azimuthal angles of each transmit LOS of each pair and the polar and azimuthal angles of the other vehicle emanating from the vehicle 371, *e.g.*, from the center, front, or back thereof.

If the other vehicle is determined not to be within a threshold distance of the vehicle or not to be in one or more optical emitters' transmit LOS, then proceed to optional block 440-3 or block 440-5. If the other vehicle is determined to be within a threshold distance of the vehicle and in one or more optical emitters' transmit LOS, then, in optional block 440-2, each optical pair, or optical emitter thereof, whose transmit LOS projects towards the other vehicle is disabled.

In optional block 440-3, for each pair, determine whether the Sun is within a cone around a receive LOS of any pair, *e.g.*, of an optical receiver of any pair. Further description of the cone, and optional parameters thereof, are described elsewhere herein. Optionally, whether the Sun is determined to be within the cone uses a geographic three-dimensional position of the vehicle, vehicle orientation, a date, a time of day, and a source of the Sun's position, such as the US National Oceanic and Atmospheric Administration's (NOAA's) Solar Calculator.

If the sun is not within a cone of any of the pairs, then proceed to optional block 440-4. If the Sun is within a cone around a receive LOS of a pair, then, in optional block 440-4, discard data from each pair, or the optical receiver thereof, whose cone partially or wholly encompasses the Sun and/or disable each such pair or an optical emitter thereof.

In block 440-5, an altitude, *e.g.*, above the Earth, of a vehicle is received, *e.g.*, from an altimeter, for example, a barometric altimeter, of the OADS, *e.g.*, the optical and electrical processing system thereof. In block 440-6, whether the altitude of the vehicle exceeds an altitude threshold level is determined. The altitude threshold level may optionally be selected by a user or a system designer. If the altitude of the vehicle is determined not to exceed the altitude threshold, then proceed to block 440-8.

In block 440-7, upon determining that the altitude of the vehicle exceeds the altitude threshold level, then disable each pair, *e.g.*, optical emitter thereof, whose transmit LOS projects towards the Earth. In block 440-8, air data parameter(s) to be determined are identified. Such identified air data parameter(s) to be determined (or obtained air data parameter(s)) may optionally specified by a system designer, and/or an operator and/or a crew of the vehicle. Such identified air data parameter(s) to be determined are determined using data, from a transmitted optical beam propagating along a unique transmit LOS and a return optical signal propagating along a unique receive LOS, of at least one pair of an optical emitter and an optical receiver.

In block 440-9, an optical beam is transmitted along a unique transmit LOS from and a return optical signal is received along a unique a unique receive LOS by each pair which has not been disabled or whose optical emitter has not been disabled. Each pair has a unique transmit LOS and a unique receive LOS as further described elsewhere herein.

In block 440-10, an SNR is determined for each return optical signal received by a pair, *e.g.*, an optical receiver thereof, which has not been disabled or whose optical emitter has not been disabled. Thus, a set of SNR(s) is determined. Optionally, to determine an SNR of a return optical signal, the power of the return optical signal is divided by a noise power within a specific bandwidth encompassing the return optical signal.

In optional block 440-11, a second subset of SNR(s) of the set of the one or more SNR(s) is determined in block 440-10. Each SNR of the second subset has an SNR greater than an SNR threshold level. The SNR threshold level is a level at or below which the SNR may not be accurate or would diminish accuracy of air data parameter determination, and may optionally be selected by a user or a system designer.

In block 440-12, a set of pairs (of an optical emitter and an optical receiver) is determined. Each pair in the set of pairs includes an optical receiver whose SNR is in a first subset of SNR(s). The first subset of SNR(s) is of the set of SNR(s), or if optional block 440-11 is performed, then of the second subset of SNR(s) rather than the set of SNR(s)). The first subset of SNR(s) excludes any pair, or optical receiver thereof, whose data is discarded pursuant to optional block 440-4. The first subset of SNR(s) includes a number of SNR(s) corresponding to a number of pair(s) of a transmitted optical beam and a return optical signal whose data is needed to determine each type of air data parameter to be determined specified in block 440-8. For example, if only air speed of the vehicle is desired, then possibly only data from one or two pairs of a transmitted optical beam and a return optical signal are needed (*e.g.*, for the OADS, for example, the optical and electrical processing system) to determine air speed. The SNR(s), of the first subset, have the largest SNR(s) of the set of SNR(s) determined in block 440-10, or if optional block 440-11 is performed, then of the second subset of SNR(s) rather than the set of SNR(s)).

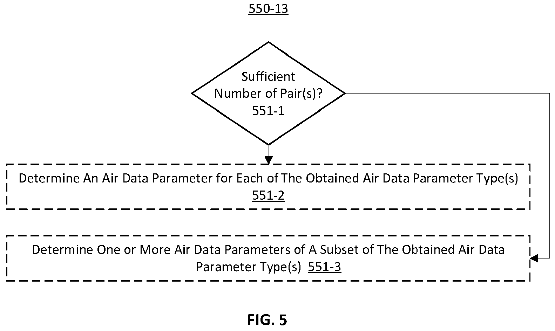

In optional block 440-13, one or more air data parameters of the at least one type of air data parameter are determined using data derived from parameters of each pair of transmitted optical beam emitted from and received optical signal received by each pair of the set of pairs of an optical emitter and an optical receiver determined in block 440-12. FIG. 5 illustrates a flow diagram of an exemplary method 550-13 for determining at least one air data parameter.

In optional block 551-1, whether there are a sufficient number of pairs of transmitted optical beams emitted from and received optical signals received by each pair of the set of pairs determined in block 440-12 to determine each obtained air data parameter. If it is determined that there are a sufficient number of pairs, then, in optional block 551-2, air data parameters of each obtained type of air data parameter is determined using data derived from parameters of each pair of transmitted optical beam emitted from and received optical signal received by each pair of the set of pairs determined in block 440-12. If it is determined that there are an insufficient number of pairs, then, in optional block 551-3, one or more air data parameters, of a subset of the obtained type of air data parameter(s), is determined using data derived from parameters of each pair of transmitted optical beam emitted from and received optical signal received by each pair of the set of pairs determined in block 440-12. For example, if there is only one pair instead of three pairs, then only one air data parameter, *e.g.*, an air speed of the vehicle, may be determined, even if the obtained type of air data parameters specified parameters other than air speed.

Optionally, blocks 440-5 through 440-10 and block 440-12 are performed periodically. When each such block is utilized, optional blocks 440-1, 440-2, 440-3, 440-4, 440-11, and 440-13 are also performed periodically. Optionally, the period of such periodic performance is ten times per second or less, or one time times per second or less.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of' with respect to a listing of items such as, for example, A and B or A and/or B, means A alone, B alone, or A and B. The term "at least one of" is used to mean one or more of the listed items can be selected.

Terms of relative position as used in this application are defined based on a plane parallel to the conventional plane or working surface of a material (*e.g.*, a layer or a substrate), regardless of orientation. Terms such as "on," "higher," "lower," "over," "top," and "under" are defined with respect to the conventional plane or working surface being on the top surface of a layer or substrate, regardless of orientation. The terms "about" or "substantially" indicate that the value or parameter specified may be somewhat altered, as long as the alteration does not result in nonconformance of the process or structure to the illustrated embodiment. Finally, "exemplary" indicates the description is used as an example, rather than implying that it is an ideal. Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

The processor circuitry described herein may include one or more microprocessors, microcontrollers, digital signal processing (DSP) elements, application-specific integrated circuits (ASICs), and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures.

The memory circuitry described herein can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), flash memory, and/or other types of solid state memory or storage device. Combinations of the above are also included within the scope of computer readable media.

Methods of the invention can be implemented in computer readable instructions, such as program modules or applications, which may be stored in the computer readable medium that is part of (optionally the memory circuitry) or communicatively coupled to the processing circuitry, and executed by the processing circuitry, optionally the processor circuitry. Generally, program modules or applications include routines, programs, objects, data components, data structures, algorithms, and the like, which perform particular tasks or implement particular abstract data types.

### EXAMPLARY EMBODIMENTS

Example 1 includes a method for improving performance and/or safety of an optical air data system (OADS) of a vehicle, wherein the OADS includes at least one pair of an optical emitter and an optical receiver, the method comprising: receiving an altitude of the vehicle; determining whether the altitude of the vehicle exceeds an altitude threshold level; determining that the altitude of the vehicle exceeds the altitude threshold level, then disabling each pair, or optical emitter of a pair whose transmit line of sight (LOS) points towards Earth; obtaining at least one type of air data parameters to be determined using data, from a transmitted optical beam propagating along a unique transmit LOS and a return optical signal propagating along a unique receive LOS, of at least one pair of the optical emitter and the optical receiver; transmitting the transmitted optical beam along the unique transmit LOS from and (b) receiving the return optical signal, along the unique receive LOS and derived from scattering and/or reflection of the transmitted optical beam at a region of atmosphere, at each pair which has not been disabled or whose optical emitter has not been disabled; generating a set of one or more signal-to-noise ratios (SNRs) of each received return optical signal of a pair which has not been disabled or whose optical emitter has not been disabled; and determining a set of pairs each of which includes an optical receiver whose SNR is in a subset, of the set of the one or more SNRs, whose number of SNRs is equal to a number of pairs needed to determine the at least one type of the air data parameters and has an SNR larger than other SNRs of the set and not of the subset.

Example 2 includes the method of Example 1, further comprising, using data derived from parameters of each pair of a transmitted optical beam emitted from and a received optical signal received by each pair of the determined set of pairs, determining one or more air data parameter of the at least one type of air data parameter.

Example 3 includes the method of any of Examples 1-2, further comprising: after generating the set of the one or more SNRs of each received return optical signal of the pair which has not been disabled or whose optical emitter has not been disabled, then determining whether each SNR of the set of the one or more SNRs of each such return optical signal exceeds SNR threshold level; wherein determining the set of pairs comprises: determining whether there are a sufficient number of one or more pairs each of whose SNR exceeds the SNR threshold level to determine the obtained at least one air data parameter of the vehicle; determining that there are an insufficient number of the one or more pairs each of whose SNR exceeds the signal-to-noise ratio threshold level, then only determining one or more air data parameters, of a subset of the at least one type of air data parameter, using data derived from parameters of each pair whose SNR exceeds the SNR threshold level; and determining that there are a sufficient number the one or more pairs each of whose SNR exceeds the signal-to-noise ratio threshold level, then determining each air data parameter, of the at least one type of air data parameter, using data derived from parameters of each pair whose SNR exceeds the SNR threshold level.

Example 4 includes the method of any of Examples 1-3, further comprising: determining whether another vehicle is within a threshold distance of the vehicle and is in one or more optical emitters' transmit LOS; and determining that the other vehicle is within the threshold distance of the vehicle and is in one or more optical emitters', then disabling each pair, or an optical emitter of each pair, whose transmit LOS projects towards the other vehicle.

Example 5 includes the method of any of Examples 1-4, further comprising: determining whether a Sun is in a cone around a receive LOS of the optical receiver of any of the pairs, wherein the cone is centered around the receive LOS and has cross section is defined by a threshold angle; and determining that the Sun is partially or wholly in at least one cone, then at least one of: (a) discarding data from each pair whose cone partially or wholly encompasses the Sun and (b) disable each pair, or the optical emitter thereof, whose cone partially or wholly encompasses the Sun.

Example 6 includes the method of Example 5, wherein the threshold angle is less than or equal to ten or fifteen degrees.

Example 7 includes the method of any of Examples 5-6, wherein determining whether the Sun is within the cone is determined using a geographic three-dimensional position of the vehicle, vehicle orientation, a date, a time of day, and a source of a Sun's position.

Example 8 includes a non-transitory computer readable medium storing a program causing at least one processor to execute a process to improve performance and/or safety of an optical air data system (OADS) of a vehicle, wherein the OADS includes at least one pair of an optical emitter and an optical receiver, the process comprising: receiving an altitude of the vehicle; determining whether the altitude of the vehicle exceeds an altitude threshold level; determining that the altitude of the vehicle exceeds the altitude threshold level, then disabling each pair or an optical emitter whose transmit line of sight (LOS) points towards Earth; obtaining at least one type of air data parameters to be determined using data, from a transmitted optical beam propagating along a unique transmit LOS and a return optical signal propagating along a unique receive LOS, of at least one pair of the optical emitter and the optical receiver; causing transmission of the transmitted optical beam along the unique transmit LOS from and (b) causing reception of the return optical signal, along the unique receive LOS and derived from scattering and/or reflection of the transmitted optical beam at a region of atmosphere, at each pair which has not been disabled or whose optical emitter has not been disabled; generating a set of one or more signal-to-noise ratios (SNRs) of each received return optical signal of a pair which has not been disabled or whose optical emitter has not been disabled; and determining a set of pairs each of which includes an optical receiver whose SNR is in a subset, of the set of the one or more SNRs, whose number of SNRs is equal to a number of pairs needed to determine the at least one type of the air data parameters and has an SNR larger than other SNRs of the set and not of the subset.

Example 9 includes the non-transitory computer readable medium of Example 8, wherein the process further comprises, using data derived from parameters of each pair of a transmitted optical beam emitted from and a received optical signal received by each pair of the determined set of pairs, determining one or more air data parameter of the at least one type of air data parameter.

Example 10 includes the non-transitory computer readable medium of any of Examples 8-9, wherein the process further comprises: after generating the set of the one or more SNRs of each received return optical signal of the pair which has not been disabled or whose optical emitter has not been disabled, then determining whether each SNR of the set of the one or more SNRs of each such return optical signal exceeds SNR threshold level; wherein determining the set of pairs comprises: determining whether there are a sufficient number of one or more pairs each of whose SNR exceeds the SNR threshold level to determine the obtained at least one air data parameter of the vehicle; determining that there are an insufficient number of the one or more pairs each of whose SNR exceeds the signal-to-noise ratio threshold level, then only determining one or more air data parameters, of a subset of the at least one type of air data parameter, using data derived from parameters of each pair whose SNR exceeds the SNR threshold level; and determining that there are a sufficient number of the one or more pairs each of whose SNR exceeds the signal-to-noise ratio threshold level, then determining each air data parameter, of the at least one type of air data parameter, using data derived from parameters of each pair whose SNR exceeds the SNR threshold level.

Example 11 includes the non-transitory computer readable medium of any of Examples 8-10, further comprising: determining whether another vehicle is within a threshold distance of the vehicle and is in one or more optical emitters' transmit LOS; and determining that the other vehicle is within the threshold distance of the vehicle and is in one or more optical emitters' transmit LOS, then disabling each pair, or an optical emitter of each pair, whose transmit LOS projects towards the other vehicle.

Example 12 includes the non-transitory computer readable medium of any of Examples 8-11, wherein the process further comprises: determining whether a Sun is in a cone around a receive LOS of the optical receiver of any of the pairs, wherein the cone is centered around the receive LOS and has cross section is defined by a threshold angle; and determining that the Sun is partially or wholly in at least one cone, then at least one of: (a) discarding data from each pair whose cone partially or wholly encompasses the Sun and (b) disable each pair, or the optical emitter thereof, whose cone partially or wholly encompasses the Sun.

Example 13 includes the non-transitory computer readable medium of Example 12, wherein the threshold angle is less than or equal to ten or fifteen degrees.

Example 14 includes an optical air data system (OADS), configured to be mounted in and/or on a vehicle, the OADS comprising: an optical and electronic processing circuit including at least one optical sensor; a laser configured to emit an optical signal; an optical combiner/divider or switch coupled to the laser, and configured to receive the optical signal and to provide the optical signal to each optical emitter; at least one optical emitter each of which is configured to emit a transmitted optical beam derived from the optical signal; and at least one optical receiver, paired with an optical emitter, each of which is optically coupled to the optical and electronic processing circuit and is configured to receive a return optical signal, wherein each return optical signal is derived from scattering and/or reflection of a unique transmitted optical beam; wherein the optical and electronic processing circuit is configured to: receive an altitude of the vehicle; determine whether the altitude of the vehicle exceeds an altitude threshold level; determine that the altitude of the vehicle exceeds the altitude threshold level, then disable each pair or optical emitter whose transmit line of sight (LOS) points towards Earth; obtain at least one type of air data parameters to be determined using data, from a transmitted optical beam propagating along a unique transmit LOS and the return optical signal propagating along a unique receive LOS, of at least one pair of an optical emitter and an optical receiver; cause transmission of the transmitted optical beam along the unique transmit LOS from and (b) cause reception of a return optical signal, along the unique receive LOS and derived from scattering and/or reflection of the transmitted optical beam at a region of atmosphere, at each pair which has not been disabled or whose optical emitter has not been disabled; generate a set of one or more signal-to-noise ratios (SNRs) of each received return optical signal of a pair which has not been disabled or whose optical emitter has not been disabled; and determine a set of pairs each of which includes an optical receiver whose SNR is in a subset, of the set of the one or more SNRs, whose number of SNRs is equal to a number of pairs needed to determine the at least one type of the air data parameters and has an SNR larger than other SNRs of the set and not of the subset.

Example 15 includes the OADS of Example 14, wherein the optical and electronic processing circuit is further configured to, using data derived from parameters of each pair of a transmitted optical beam emitted from and a received optical signal received by each pair of the determined set of pairs, determine one or more air data parameter of the at least one type of air data parameter.

Example 16 includes the OADS of any of Examples 14-15, wherein the optical and electronic processing circuit is further configured to: after generating the set of the one or more SNRs of each received return optical signal of the pair which has not been disabled or whose optical emitter has not been disabled, then determine whether each SNR of the set of the one or more SNRs of each such return optical signal exceeds SNR threshold level; wherein determine the set of pairs comprises: determine whether there are a sufficient number of one or more pairs each of whose SNR exceeds the SNR threshold level to determine the obtained at least one air data parameter of the vehicle; determining that there are an insufficient number of the one or more pairs each of whose SNR exceeds the signal-to-noise ratio threshold level, then only determine one or more air data parameters, of a subset of the at least one type of air data parameter, using data derived from parameters of each pair whose SNR exceeds the SNR threshold level; and determining that there are a sufficient number of the one or more pairs each of whose SNR exceeds the signal-to-noise ratio threshold level, then determine each air data parameter, of the at least one type of air data parameter, using data derived from parameters of each pair whose SNR exceeds the SNR threshold level.

Example 17 includes the OADS of any of Examples 14-16, wherein the optical and electronic processing circuit is further configured to: determine whether another vehicle is within a threshold distance of the vehicle and is in a LOS of an optical emitter of the OADS; and determining that the other vehicle is within the threshold distance of the vehicle and is in the LOS of the optical emitter of the OADS, then disable each pair, or an optical emitter of each pair, whose transmit LOS projects towards the other vehicle.

Example 18 includes the OADS of any of Examples 14-17, wherein the optical and electronic processing circuit is further configured to: determine whether a Sun is in a cone around a receive LOS of the optical receiver of any of the pairs, wherein the cone is centered around the receive LOS and has cross section is defined by a threshold angle; and determine that the Sun is partially or wholly in at least one cone, then at least one of: (a) discarding data from each pair whose cone partially or wholly encompasses the Sun and (b) disable each pair, or the optical emitter thereof, whose cone partially or wholly encompasses the Sun.

Example 19 includes the OADS of Example 18, wherein determining whether the Sun is within the cone is determined using a geographic three-dimensional position of the vehicle, vehicle orientation, a date, a time of day, and a source of a Sun's position.

Example 20 includes the OADS of any of Examples 14-19, further comprising an optical head configured to be mounted on and/or in a body of the vehicle and including only two pairs of one of the at least one optical emitter and one of the at least one optical receiver.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for improving performance and/or safety of an optical air data system (OADS) of a vehicle, wherein the OADS includes at least one pair of an optical emitter and an optical receiver, the method comprising:
receiving an altitude of the vehicle;
determining whether the altitude of the vehicle exceeds an altitude threshold level;
determining that the altitude of the vehicle exceeds the altitude threshold level, then disabling each pair, or optical emitter of a pair whose transmit line of sight (LOS) points towards Earth;
obtaining at least one type of air data parameters to be determined using data, from a transmitted optical beam propagating along a unique transmit LOS and a return optical signal propagating along a unique receive LOS, of at least one pair of the optical emitter and the optical receiver;
(a) transmitting the transmitted optical beam along the unique transmit LOS from and (b) receiving the return optical signal, along the unique receive LOS and derived from scattering and/or reflection of the transmitted optical beam at a region of atmosphere, at each pair which has not been disabled or whose optical emitter has not been disabled;
generating a set of one or more signal-to-noise ratios (SNRs) of each received return optical signal of a pair which has not been disabled or whose optical emitter has not been disabled; and
determining a set of pairs each of which includes an optical receiver whose SNR is in a subset, of the set of the one or more SNRs, whose number of SNRs is equal to a number of pairs needed to determine the at least one type of the air data parameters and has an SNR larger than other SNRs of the set and not of the subset.

2. The method of claim 1, further comprising, using data derived from parameters of each pair of a transmitted optical beam emitted from and a received optical signal received by each pair of the determined set of pairs, determining one or more air data parameter of the at least one type of air data parameter.

3. The method of claim 1, further comprising:
after generating the set of the one or more SNRs of each received return optical signal of the pair which has not been disabled or whose optical emitter has not been disabled, then determining whether each SNR of the set of the one or more SNRs of each such return optical signal exceeds SNR threshold level;
wherein determining the set of pairs comprises:
determining whether there are a sufficient number of one or more pairs each of whose SNR exceeds the SNR threshold level to determine the obtained at least one air data parameter of the vehicle;
determining that there are an insufficient number of the one or more pairs each of whose SNR exceeds the signal-to-noise ratio threshold level, then only determining one or more air data parameters, of a subset of the at least one type of air data parameter, using data derived from parameters of each pair whose SNR exceeds the SNR threshold level; and
determining that there are a sufficient number the one or more pairs each of whose SNR exceeds the signal-to-noise ratio threshold level, then determining each air data parameter, of the at least one type of air data parameter, using data derived from parameters of each pair whose SNR exceeds the SNR threshold level.

4. The method of claim 1, further comprising:
determining whether another vehicle is within a threshold distance of the vehicle and is in one or more optical emitters' transmit LOS; and
determining that the other vehicle is within the threshold distance of the vehicle and is in one or more optical emitters', then disabling each pair, or an optical emitter of each pair, whose transmit LOS projects towards the other vehicle.

5. The method of claim 1, further comprising:
determining whether a Sun is in a cone around a receive LOS of the optical receiver of any of the pairs, wherein the cone is centered around the receive LOS and has cross section is defined by a threshold angle; and
determining that the Sun is partially or wholly in at least one cone, then at least one of: (a) discarding data from each pair whose cone partially or wholly encompasses the Sun and (b) disable each pair, or the optical emitter thereof, whose cone partially or wholly encompasses the Sun;
optionally, wherein the threshold angle is less than or equal to ten or fifteen degrees;
optionally, wherein determining whether the Sun is within the cone is determined using a geographic three-dimensional position of the vehicle, vehicle orientation, a date, a time of day, and a source of a Sun's position.

6. An optical air data system (OADS), configured to be mounted in and/or on a vehicle, the OADS comprising:
an optical and electronic processing circuit including at least one optical sensor;
a laser configured to emit an optical signal;
an optical combiner/divider or switch coupled to the laser, and configured to receive the optical signal and to provide the optical signal to each optical emitter;
at least one optical emitter each of which is configured to emit a transmitted optical beam derived from the optical signal; and
at least one optical receiver, paired with an optical emitter, each of which is optically coupled to the optical and electronic processing circuit and is configured to receive a return optical signal, wherein each return optical signal is derived from scattering and/or reflection of a unique transmitted optical beam;
wherein the optical and electronic processing circuit is configured to:
receive an altitude of the vehicle;
determine whether the altitude of the vehicle exceeds an altitude threshold level;
determine that the altitude of the vehicle exceeds the altitude threshold level, then disable each pair or optical emitter whose transmit line of sight (LOS) points towards Earth;
obtain at least one type of air data parameters to be determined using data, from a transmitted optical beam propagating along a unique transmit LOS and the return optical signal propagating along a unique receive LOS, of at least one pair of an optical emitter and an optical receiver;
(a) cause transmission of the transmitted optical beam along the unique transmit LOS from and (b) cause reception of a return optical signal, along the unique receive LOS and derived from scattering and/or reflection of the transmitted optical beam at a region of atmosphere, at each pair which has not been disabled or whose optical emitter has not been disabled;
generate a set of one or more signal-to-noise ratios (SNRs) of each received return optical signal of a pair which has not been disabled or whose optical emitter has not been disabled; and
determine a set of pairs each of which includes an optical receiver whose SNR is in a subset, of the set of the one or more SNRs, whose number of SNRs is equal to a number of pairs needed to determine the at least one type of the air data parameters and has an SNR larger than other SNRs of the set and not of the subset.

7. The OADS of claim 6, wherein the optical and electronic processing circuit is further configured to, using data derived from parameters of each pair of a transmitted optical beam emitted from and a received optical signal received by each pair of the determined set of pairs, determine one or more air data parameter of the at least one type of air data parameter.

8. The OADS of claim 6, wherein the optical and electronic processing circuit is further configured to:
after generating the set of the one or more SNRs of each received return optical signal of the pair which has not been disabled or whose optical emitter has not been disabled, then determine whether each SNR of the set of the one or more SNRs of each such return optical signal exceeds SNR threshold level;
wherein determine the set of pairs comprises:
determine whether there are a sufficient number of one or more pairs each of whose SNR exceeds the SNR threshold level to determine the obtained at least one air data parameter of the vehicle;
determining that there are an insufficient number of the one or more pairs each of whose SNR exceeds the signal-to-noise ratio threshold level, then only determine one or more air data parameters, of a subset of the at least one type of air data parameter, using data derived from parameters of each pair whose SNR exceeds the SNR threshold level; and
determining that there are a sufficient number of the one or more pairs each of whose SNR exceeds the signal-to-noise ratio threshold level, then determine each air data parameter, of the at least one type of air data parameter, using data derived from parameters of each pair whose SNR exceeds the SNR threshold level.

9. The OADS of claim 6, wherein the optical and electronic processing circuit is further configured to:
determine whether another vehicle is within a threshold distance of the vehicle and is in a LOS of an optical emitter of the OADS; and
determining that the other vehicle is within the threshold distance of the vehicle and is in the LOS of the optical emitter of the OADS, then disable each pair, or an optical emitter of each pair, whose transmit LOS projects towards the other vehicle.

10. The OADS of claim 6, wherein the optical and electronic processing circuit is further configured to:
determine whether a Sun is in a cone around a receive LOS of the optical receiver of any of the pairs, wherein the cone is centered around the receive LOS and has cross section is defined by a threshold angle; and
determine that the Sun is partially or wholly in at least one cone, then at least one of: (a) discarding data from each pair whose cone partially or wholly encompasses the Sun and (b) disable each pair, or the optical emitter thereof, whose cone partially or wholly encompasses the Sun;
optionally, wherein determining whether the Sun is within the cone is determined using a geographic three-dimensional position of the vehicle, vehicle orientation, a date, a time of day, and a source of a Sun's position;
optionally, wherein the OADS further comprises an optical head configured to be mounted on and/or in a body of the vehicle and including only two pairs of one of the at least one optical emitter and one of the at least one optical receiver.
